# FASCICULE DE BREVET EUROPEEN

(11) **EP 1 463 614 B1**
(45) Date de publication et mention de la délivrance du brevet: **21.06.2006**
(21) Numéro de dépôt: 03709855.5
(22) Date de dépôt: 07.01.2003
(51) Int. Cl.: B25J 21/02, G21F 7/047

(54) **PROCEDE DE MONTAGE D'UN EQUIPEMENT DE MANIPULATION SUR UNE ENCEINTE DE CONFINEMENT CONTENANT UN MILIEU STERILE**
VERFAHREN ZUM ANSCHLIESSEN EINER HANDHABUNGSEINRICHTUNG AN EINE HÜLLE MIT STERILEM INHALT
METHOD OF MOUNTING A PIECE OF HANDLING EQUIPMENT TO A CONTAINMENT CHAMBER CONTAINING A STERILE MEDIUM

(30) Priorité: 09.01.2002 FR 0200200
(43) Date de publication de la demande: 06.10.2004
(73) Titulaire: La Calhene, 41102 Vendome Cedex (FR)
(72) Inventeur: GLACHET, Charles, F-41100 Vendome (FR); BROSSARD, Jean Pierre, F-78400 Chatou (FR)
(74) Mandataire: Poulin, Gérard
(86) Numéro de dépôt international: PCT/FR2003/000019
(87) Numéro de publication internationale: WO 2003/057431

(56) Documents cités:
- EP-A- 0 720 895
- EP-A- 0 730 907
- EP-A- 0 748 967
- EP-A- 0 830 896
- GB-A- 2 102 719
- PATENT ABSTRACTS OF JAPAN vol. 2000, no. 12, 3 janvier 2001 (2001-01-03) & JP 2000 237606 A (HITACHI LTD;NATL SPACE DEVELOPMENT AGENCY OF JAPAN), 5 septembre 2000 (2000-09-05)

## Description

### Domaine technique

L'invention concerne un procédé de montage d'un équipement de manipulation tel qu'un gant sur une paroi d'une enceinte de confinement contenant un milieu stérile ou à la fois stérile et toxique.

Le procédé selon l'invention peut être utilisé dans tous les domaines dans lesquels des manipulations doivent être effectuées périodiquement à l'intérieur d'un volume stérile. Parmi ces domaines ont citera à titre d'exemple les domaines pharmaceutique, médical, chimique, électronique, etc..

### Etat de la technique

Depuis de nombreuses années, on utilise des enceintes de confinement afin de délimiter un volume clos vis-à-vis de l'atmosphère extérieure.

Lorsque le volume délimité par l'enceinte contient une atmosphère dangereuse comme c'est notamment le cas dans l'industrie nucléaire, les parois de l'enceinte ont pour fonction d'empêcher que cette atmosphère dangereuse ne s'échappe du volume confiné.

Au contraire, lorsque le volume délimité par l'enceinte contient une atmosphère stérile, les parois de l'enceinte ont pour fonction d'empêcher que cette atmosphère stérile ne soit polluée par l'atmosphère extérieure.

Afin de pouvoir intervenir à l'intérieur du volume clos délimité par une enceinte de confinement, il est nécessaire de disposer, au moins à titre temporaire, d'un ou plusieurs équipements de manipulation tels que des gants, un demi scaphandre, etc.. A cet effet, les parois des enceintes comportent généralement au moins une ouverture délimitée par une bride qui fait partie intégrante de la paroi et sur laquelle est monté l'équipement de manipulation.

Un équipement de manipulation tel qu'un gant ou un demi scaphandre est réalisé en un matériau souple tel que du latex, du PVC, du néoprène, etc.. Il constitue donc à la fois une source de fuites potentielles et une pièce d'usure. Cela a conduit les concepteurs des enceintes de confinement à prévoir le remplacement des équipements de manipulation sans perte du confinement. Pour tenir compte de la présence éventuelle de microfuites non décelables dans les équipements de manipulation, il est fréquent d'obturer au moyen d'une porte l'ouverture de la bride portant cet équipement, lorsqu'il n'est pas utilisé.

Lorsque l'atmosphère contenue dans le volume délimité par l'enceinte de confinement est une atmosphère dangereuse, le remplacement d'un équipement de manipulation tel qu'un gant s'effectue habituellement depuis l'extérieur de l'enceinte, à l'aide d'un outillage approprié. Si ce remplacement conduit à introduire dans l'enceinte une petite quantité d'air située initialement à l'extérieur de celle-ci, cela est sans conséquence. En effet, l'atmosphère extérieure reste protégée vis-à-vis de l'atmosphère contenue dans l'enceinte de confinement.

En revanche, on comprend aisément que cette technique n'est pas transposable au cas où l'enceinte de confinement renferme un volume stérile. En effet, elle conduirait à introduire de l'air pollué dans ce volume stérile.

Pour cette raison, le remplacement des équipements de manipulation équipant une enceinte stérile s'effectue, habituellement par l'intérieur de l'enceinte, en utilisant d'autres équipements de manutention présents sur celle-ci et en ayant recours à un dispositif de transfert à double porte permettant de faire communiquer l'intérieur de l'enceinte de confinement avec un conteneur de transport extérieur.

Selon ces techniques habituelles, on accoste sur l'enceinte un conteneur dont l'intérieur a été préalablement stérilisé et qui contient au moins un équipement de manipulation de rechange. On met ensuite en communication ce conteneur avec l'intérieur de l'enceinte en ouvrant la double porte depuis l'intérieur de l'enceinte, puis on introduit l'équipement de manipulation de rechange dans l'enceinte, en utilisant les équipements de manipulation présents dans l'enceinte de confinement. Le remplacement de l'un de ces équipements de manipulation s'effectue alors par l'intérieur de l'enceinte au moyen des équipements de manipulation restants.

Cette description de l'état de la technique montre que les techniques existantes ne permettent pas de remplacer un équipement de manipulation d'une enceinte de confinement renfermant un volume stérile en agissant directement par l'extérieur de l'enceinte. Dans le cas d'une enceinte renfermant un volume stérile, cela conduit à imposer la présence de plusieurs équipements de manipulation et au moins un orifice d'accès permettant l'accostage d'un conteneur. Par ailleurs, cela interdit le remplacement de tous les équipements de manipulation par des portes ou des couvercles lorsque ces équipements sont inutilisés.

En outre, les interventions effectuées par l'intérieur de l'enceinte à l'aide d'équipements de manipulation équipant ce dernier sont plus longues et plus délicates que celles qui sont effectuées directement depuis l'extérieur, comme c'est le cas lorsque le milieu stérile est également toxique.

On connaît aussi du document GB-A-2 102 719 un dispositif permettant de monter un conteneur ou un gant de manipulation sur une interface prévue à cet effet sur une enceinte de confinement telle qu'une boîte à gants. L'interface de l'enceinte de confinement comprend une bride fixe qui délimite une ouverture normalement fermée par une porte d'enceinte. Le conteneur et le gant de manipulation comprennent une bride mobile qui délimite également une ouverture normalement fermée par une porte de conteneur ou de gant.

Selon ce document GB-A-2 102 719, lorsque la bride mobile est accostée sur la bride fixe, les deux portes sont automatiquement connectées l'une à l'autre de façon à former une double porte. La porte du gant est munie d'une poignée sur sa face tournée vers l'intérieur du gant, de telle sorte qu'un opérateur peut faire tourner la double porte à l'aide du gant, pour la désolidariser des brides et la placer à l'intérieur de l'enceinte de confinement.

Le dispositif décrit dans ce document est conçu pour être utilisé avec une enceinte de confinement telle qu'une boîte à gants contenant des matières radioactives ou dangereuses. Le problème posé par la présence éventuelle d'un milieu stérile à l'intérieur de l'enceinte n'y est pas abordé et aucune solution à ce problème n'est suggérée.

On a également proposé, dans le document EP-A-0 748 967, un couvercle destiné à être placé sur la porte d'un récipient conçu pour faire circuler une vapeur stérilisante à l'intérieur d'une boîte à gants, afin d'en assurer la stérilisation. A cet effet., le récipient est accosté sur la boîte à gants par l'intermédiaire d'un dispositif de raccordement à double porte. Le couvercle est placé sur la porte du récipient, avant son raccordement sur la boîte à gants. Il permet d'ouvrir ladite porte pour en stériliser le contour, par la mise en oeuvre des moyens de stérilisation associés au récipient.

### Exposé de l'invention

L'invention a pour but de résoudre au moins en partie les problèmes posés, selon l'art antérieur, par le montage d'un équipement de manipulation sur une enceinte de confinement devant contenir un milieu stérile.

De façon plus précise, l'invention a pour but de permettre, en une période de temps minimale, le montage d'un équipement de manipulation sur une enceinte de confinement devant contenir un milieu stérile, en assurant une stérilisation efficace de la partie cachée de l'interface de l'enceinte de confinement.

Conformément à l'invention, ce résultat est obtenu au moyen d'un procédé de montage d'un équipement de manipulation sur une interface d'une enceinte de confinement, comprenant une bride fixe délimitant une ouverture d'enceinte fermée par une porte d'enceinte, ledit procédé comprenant les étapes suivantes :
- préparation d'un ensemble comprenant ledit équipement de manipulation, monté sur une bride mobile délimitant une ouverture d'équipement fermée par une porte d'équipement ;
- accostage dudit ensemble sur ladite interface, de façon à connecter la bride mobile à la bride fixe et la -porte d'équipement à la porte d'enceinte ;
- ouverture de la double porte formée par la porte d'équipement et la porte d'enceinte connectées l'une à l'autre ;
caractérisé en ce que, l'enceinte de confinement devant contenir un milieu stérile, l'étape de préparation dudit ensemble est suivie des étapes suivantes :
- stérilisation dudit ensemble ; et
- stérilisation de l'enceinte de confinement et d'une partie cachée de l'interface, après accostage d'un outillage étanche sur la bride fixe et ouverture partielle de la porte d'enceinte.

L'utilisation d'un outillage étanche, accosté sur la bride de l'enceinte de confinement, pour stériliser la partie cachée de l'interface en même temps que ladite enceinte, avant que l'ensemble de manipulation soit accosté sur l'interface, permet de stériliser efficacement ladite partie cachée en une période de temps minimale. Cela constitue un avantage essentiel par rapport à une autre technique possible, selon laquelle on stériliserait simultanément l'enceinte de confinement et l'ensemble de manipulation. En effet, cet ensemble est généralement réalisé au moins en partie en un matériau souple tel que du vinyle, qui risqueraient de former des plis créant des zones cachées qui ne seraient pas stérilisées. De plus, le matériau souple absorberait l'agent stérilisant et allongerait donc le temps d'aération nécessaire à la stérilisation.

Selon un mode de réalisation préféré de l'invention, l'ensemble précité est accosté sur l'interface en commandant sa rotation au moyen d'un organe de manoeuvre amovible préalablement monté sur la bride mobile.

Avantageusement, on contrôle l'étanchéité de l'équipement de manipulation en connectant une boîte de contrôle sur la bride fixe, après l'accostage dudit ensemble et l'ouverture de la double porte. On peut aussi effectuer ce contrôle en déconnectant l'ensemble précité de l'interface et en le connectant sur une boîte de contrôle indépendante.

Avantageusement encore, on ouvre la double porte et on la place dans l'enceinte de confinement au moyen d'une poignée montée sur la porte d'équipement, à l'intérieur de l'équipement.

Dans le mode de réalisation préféré de l'invention, l'équipement de manipulation est un gant.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue de côté, en coupe, qui illustre schématiquement l'accostage d'un outillage étanche sur une interface d'une enceinte de confinement ;
- la figure 2 est une vue comparable à la figure 1, qui illustre schématiquement l'ouverture partielle de la porte d'enceinte à l'aide de l'outillage étanche, permettant de stériliser une partie cachée de l'interface en même temps- que l'enceinte ;
- la figure 3 est une vue comparable aux figures 1 et 2, qui illustre schématiquement l'accostage d'un ensemble comprenant un équipement de manipulation sur l'interface de l'enceinte de confinement ; et
- la figure 4 est une vue comparable aux figures 1 à 3, illustrant schématiquement l'ouverture de la double porte.

### Description détaillée d'un mode de réalisation préféré de l'invention

Sur les figures, la référence 10 désigne la paroi d'une enceinte de confinement dont seule une petite partie est visible. Cette paroi délimite un volume 12 appelé à contenir un milieu stérile et dont le confinement vis-à-vis de l'atmosphère extérieure doit être préservé à tout moment. La paroi 10 de l'enceinte de confinement peut être réalisée en un matériau quelconque apte à préserver le confinement, sans sortir du cadre de l'invention.

La paroi 10 de l'enceinte de confinement présente une ou plusieurs interfaces 13 permettant de monter sur ladite enceinte différents équipements de manipulation et de les remplacer lorsque cela est nécessaire, sans rupture du confinement. Chaque interface 13 comprend une bride fixe 14, de forme circulaire, montée de façon étanche sur la paroi 10 de l'enceinte de confinement, de façon à délimiter intérieurement une ouverture d'enceinte circulaire 16.

Le montage de la bride fixe 14 sur la paroi 10 est réalisé de façon à comprimer entre eux un joint d'étanchéité annulaire 18.

Une porte d'enceinte 20 obture normalement de façon étanche l'ouverture 16 délimitée par la bride fixe 14. De façon plus précise, des moyens de raccordement étanche 22, du type à baïonnette, sont prévus pour permettre le raccordement étanche de la porte d'enceinte 20 sur la bride fixe 14. Les moyens de raccordement étanche à baïonnette 22 présentent une structure bien connue, qui ne sera pas décrite ici en détail. Ils sont constitués de languettes et d'encoches complémentaires formées respectivement dans la bride fixe 14 et à la périphérie de la porte d'enceinte 20. Les moyens de raccordement étanche 22 peuvent passer d'un état accouplé dans un état désaccouplé, et inversement, sous l'effet d'une rotation de la porte d'enceinte 20 autour de son axe. A titre d'exemple, l'angle de rotation de la porte d'enceinte 20 permettant de passer de l'état accouplé à l'état désaccouplé peut être d'environ 30°.

Un joint d'étanchéité annulaire 24, de section sensiblement triangulaire, est monté sur la -périphérie de la porte d'enceinte 20, dans la partie de celle-ci tournée vers l'extérieur de l'enceinte. Lorsque la porte 20 est accouplée sur la bride 14, ce joint d'étanchéité annulaire 24 est en contact étanche avec la surface intérieure de la bride 14 délimitant l'ouverture 16.

Il est à noter que la coopération de la porte d'enceinte 20 avec la bride fixe 14 est telle que l'extraction de la porte d'enceinte 20 hors de l'ouverture 16 ne peut se faire que vers l'intérieur de l'enceinte de confinement.

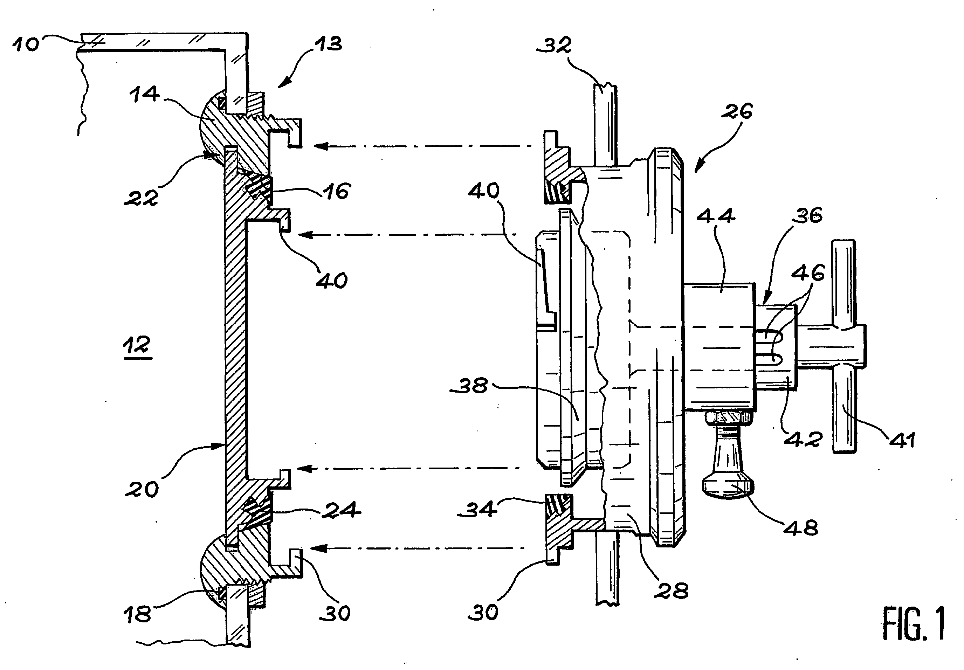

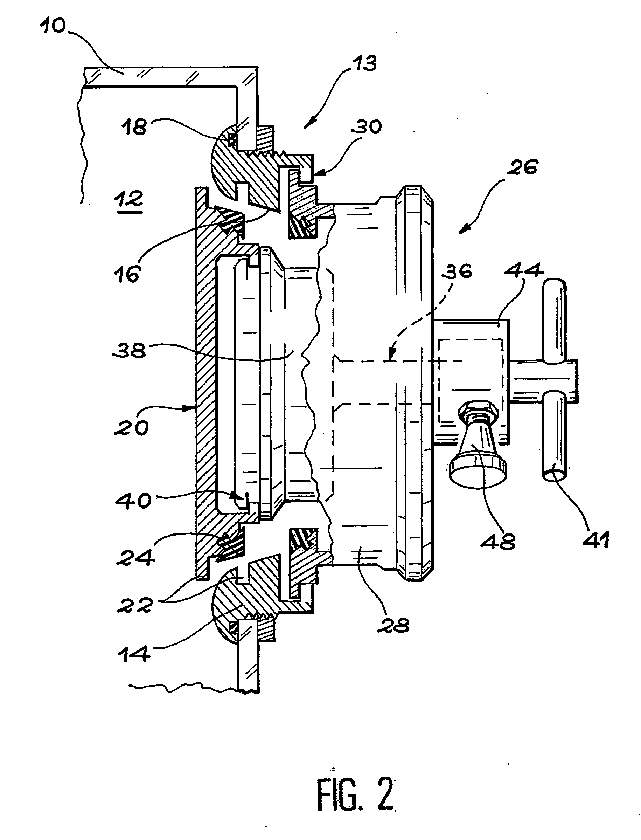

Comme on l'a représenté schématiquement sur les figures 1 et 2, la stérilisation -d'une partie cachée de l'interface 13 est réalisée en même temps que celle du volume 12 délimité à l'intérieur de l'enceinte de confinement, après accostage d'un outillage étanche 26 sur ladite interface 13. Plus précisément, la partie cachée de l'interface 13 dont on effectue la stérilisation comprend la partie du joint d'étanchéité annulaire 24 qui est normalement en contact étanche avec la surface intérieure de la bride 14 délimitant l'ouverture 16, ainsi que ladite surface intérieure.

Comme l'illustrent les figures 1 et 2, l'outillage étanche 26 comprend une enveloppe extérieure 28 en forme de cloche, dont l'extrémité ouverte est apte à venir s'accoster sur la face extérieure de la bride fixe 14 par l'intermédiaire de moyens de raccordement étanches 30. Ces moyens de raccordement sont matérialisés par des languettes et des encoches complémentaires formées respectivement sur l'extrémité ouverte de l'enveloppe extérieure 28 et sur la face extérieure de la bride 14. La venue en prise des languettes et des encoches est assurée par une rotation de l'enveloppe extérieure 28, commandée par exemple par le montage de leviers de manoeuvre démontables 32 sur ladite enveloppe.

Un joint d'étanchéité annulaire 34, de section sensiblement -triangulaire, est monté sur la face extérieure de l'extrémité ouverte de l'enveloppe extérieure 28. Lorsque l'outillage étanche 26 est accouplée sur la bride 14, ce joint d'étanchéité annulaire 34 est en contact étanche avec la surface extérieure de la bride 14 délimitant l'ouverture 16.

L'outillage étanche 26 comprend de plus une partie mobile 36, supportée par l'enveloppe extérieure 28 de façon à pouvoir tourner et se déplacer axialement à l'intérieur de celle-ci. Plus précisément, la partie mobile 36 comporte une enveloppe intérieure 38 en forme de cloche, dont l'extrémité ouverte est apte à venir s'accoster sur la face extérieure de la porte d'enceinte 20 par l'intermédiaire de moyens de raccordement étanches 40. Ces moyens de raccordement sont matérialisés par des languettes et des encoches complémentaires formées respectivement sur l'extrémité ouverte de l'enveloppe intérieure 38 et sur la face extérieure de la porte 20. La venue en prise des languettes et des encoches est assurée par une rotation de la partie mobile 36.

La rotation de la partie mobile 36 est commandée au moyen d'une poignée 40 fixée sur un tronçon cylindrique 42 de ladite partie mobile, à l'extrémité de ce tronçon 42 située à l'extérieur de l'enveloppe extérieure 28. L'autre extrémité du tronçon cylindrique 42 est solidaire de l'enveloppe intérieure 38. Le tronçon cylindrique 42 traverse selon son axe une partie centrale tubulaire 44 solidaire du fond de l'enveloppe extérieure 24, de façon telle que la partie mobile 36 peut se déplacer en rotation et en translation par rapport à l'enveloppe extérieure. Des moyens d'étanchéité (non représentés) sont interposés entre la partie mobile 36 et l'enveloppe extérieure 28, afin de préserver le confinement de l'intérieur de ladite enveloppe 28, lorsque celle-ci est accostée sur l'interface 13.

Des moyens de guidage sont interposés entre l'enveloppe extérieure 28 et la partie mobile 36 pour limiter les déplacements précités à un mouvement de translation suivi d'un mouvement de rotation, et inversement.

Dans le mode de réalisation représenté, ces moyens de guidage comprennent au moins une rainure de guidage 46 usinée sur la tige 42 et une broche 48 traversant radialement la partie centrale tubulaire 44 de l'enveloppe extérieure 28. L'extrémité de la broche 48 pénètre dans la rainure 46, de façon à imposer un déplacement relatif prédéterminé de la partie mobile 36 par rapport à l'enveloppe extérieure 28. Un bouton solidaire de la broche 48 permet à un opérateur de dégager la broche de la rainure, lorsque cela s'avère nécessaire.

Comme on l'a représenté schématiquement sur la figure 1, on accoste d'abord l'outillage étanche 26 en mettant en prise les moyens de raccordement étanche 30, 40 prévus, d'une part entre l'enveloppe extérieure 28 et la bride 14 de l'interface 13 et, d'autre part entre l'enveloppe intérieure 38 et la porté 20. Cet accostage est effectué en faisant tourner l'enveloppe extérieure 28, par exemple de 30°, à l'aide des-leviers de manoeuvre 32.

On commande ensuite une ouverture partielle de la porte d'enceinte 20 à l'aide de la poignée 40, comme l'illustre la figure 2. A cet effet, l'opérateur actionne d'abord la poignée 41 en rotation, de façon à désaccoupler les moyens de raccordement étanche 22 prévus entre la porte d'enceinte 20 et la bride fixe 14. Cette rotation de la poignée 41 est rendue possible par la coopération de la broche 48 avec la rainure 46.

L'opérateur commande ensuite une translation de la partie mobile 36 vers l'intérieur de l'enceinte de confinement en poussant sur la poignée 40. On réalise ainsi une ouverture partielle de la porte d'enceinte 20, qui a pour effet de dégager le joint d'étanchéité 24 de la surface intérieure de la bride 14 délimitant l'ouverture d'enceinte 16, comme l'illustre la figure 2.

L'opérateur procède alors à la stérilisation de l'enceinte de confinement en mettant en oeuvre des moyens de stérilisation classiques (non représentés) prévus à cet effet. Ces moyens de stérilisation peuvent notamment utiliser de la vapeur chimique.

Conformément à l'invention, la stérilisation du volume intérieur 12 de l'enceinte de confinement s'accompagne d'une stérilisation de la partie cachée de l'interface 13, c'est à dire des surfaces normalement en contact du joint 24 et de la bride 14. Lorsque la stérilisation est terminée, la poignée 41 est manoeuvrée en sens inverse de façon à refermer la porte d'enceinte 20 et à désaccoupler l'outillage étanche 26. On se retrouve alors dans une configuration analogue à celle de la figure 1.

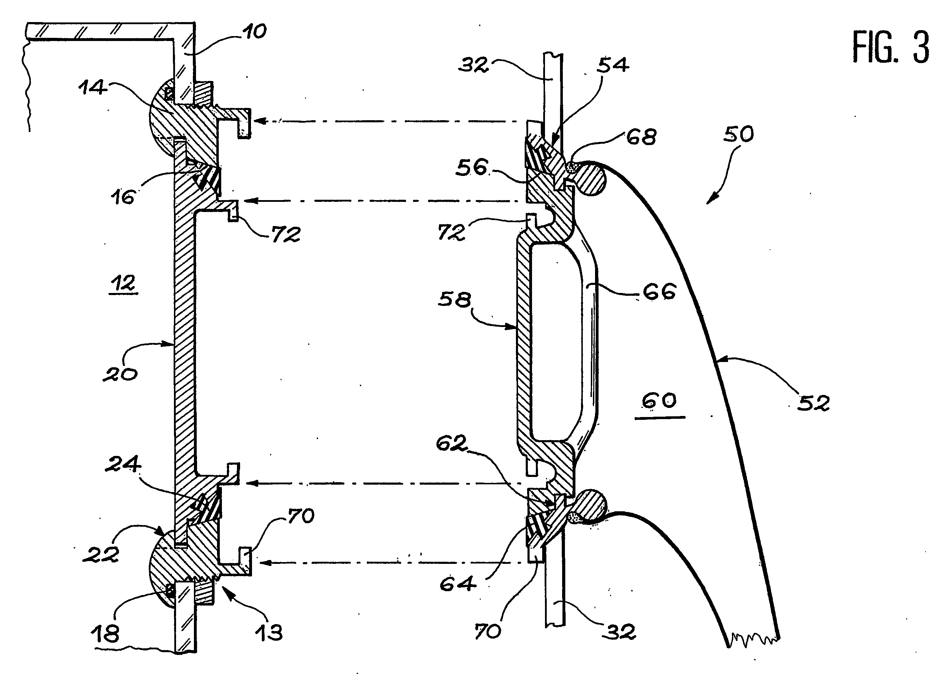

Parallèlement, l'équipement de manipulation 52 que l'on désire monter sur l'interface 13 est préparé, pour former un ensemble 50 (figure 3) prêt à être-monté sur ladite interface.

A cet effet, l'ensemble- 50 comprend une bride mobile 54, qui délimite une ouverture d'équipement 56 normalement obturée de façon étanche par une porte d'équipement 58 et l'équipement de manipulation 52, souple et étanche, constitué dans ce cas-par un gant. Lorsque la porte 58 est placée dans la bride 54, cet ensemble 50 délimite intérieurement un espace stérile 60 entre la porte 58, la bride 54 et l'élément de manipulation 52. La stérilisation de l'espace 60 peut être réalisée par tout moyen approprié, par exemple en plaçant l'ensemble 50 dans un sachet étanche et en utilisant une technique de stérilisation par irradiation gamma.

De façon plus précise, la porte d'équipement 58 est prévue pour obturer de façon étanche l'ouverture d'équipement 56 formée dans la bride mobile 54. A cet effet, il est prévu entre la porte 58 et la bride 54 des moyens d'accouplement étanche 62 du type à baïonnette. Comme les autres moyens d'accouplement étanche 22, 30 et 40, ces moyens d'accouplement étanche 62 sont réalisés d'une manière bien connue des spécialistes, de telle sorte qu'aucune description détaillée n'en sera faite. Les moyens d'accouplement étanche 62 comprennent des mécanismes complémentaires formés respectivement à l'intérieur de la bride mobile 54 et à l'extérieur de la porte d'équipement 58, ainsi qu'un joint d'étanchéité annulaire 64, de section sensiblement triangulaire, monté dans la bride mobile 54 sur la face de cette bride prévue pour venir en contact avec la face extérieure de la bride fixe 14.

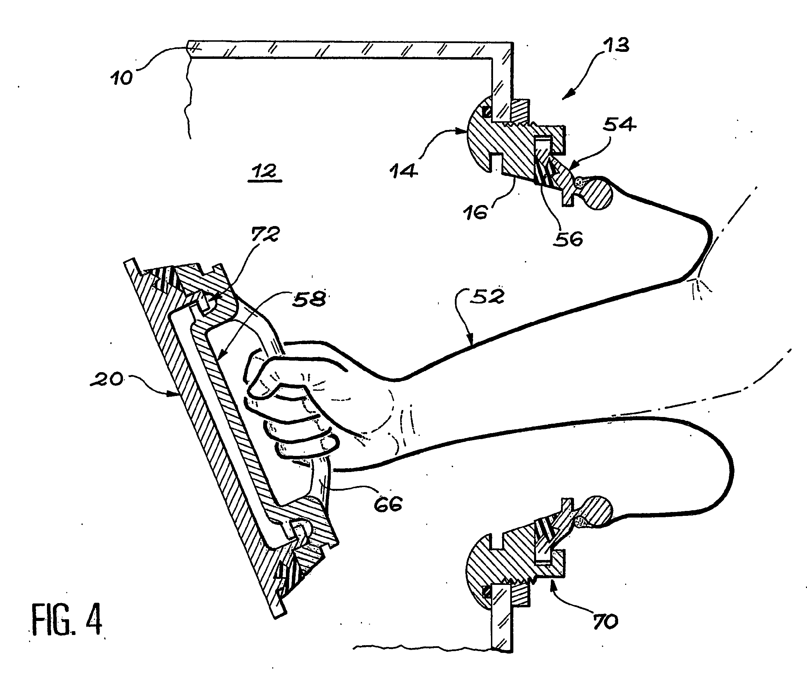

Les moyens d'accouplement étanche 62 du type à baïonnette sont actionnés par une rotation, par exemple d'environ 30°, de la porte d'équipement 58 autour de son axe. Cette rotation permet de faire passer les moyens d'accouplement 62 d'un état accouplé illustré sur la figure 3 dans un état désaccouplé illustré sur la figure 4. Lorsque la porte d'équipement 58 est accouplée sur la bride mobile 54, la surface extérieure de la porte est en contact étanche avec le joint d'étanchéité 64.

Comme l'illustre notamment la figure 4, la coopération de la bride mobile 54 et de la porte d'équipement 58 est telle que l'ouverture de cette dernière ne peut se faire que vers l'extérieur par rapport à l'espace stérile 60 délimité entre la bride 54, la porte 58 et l'équipement de manipulation 52.

Comme l'illustrent les figures 3 et 4, la porte d'équipement 58 est munie de moyens de manoeuvre 66, sur sa face tournée vers l'espace stérile 60 et l'équipement de manipulation 52 lorsque les deuxièmes moyens d'accouplement étanche 62 sont accouplés. Dans la forme de réalisation représentée, ces moyens de manoeuvre 66 sont constitués par une poignée. Comme on le comprendra mieux par la suite, cette poignée 66 permet de manoeuvrer la porte d'équipement 58 de façon à actionner notamment les moyens d'accouplement étanche 22 et 62 lorsqu'on désire mettre en place, enlever ou remplacer un équipement de manipulation 52.

Il est à noter que l'utilisation d'une poignée 66 comme moyen de manoeuvre est particulièrement adaptée au cas où les moyens d'accouplement étanche 22 et 62 sont du type à baïonnette. Si ces moyens d'accouplement étanche sont d'un type différent, la poignée 66 peut être remplacée par des moyens de manoeuvre de nature différente conçus pour actionner les différents moyens d'accouplement.

Dans la forme de réalisation illustrée sur les figures 3 et 4, le montage de l'équipement de manipulation 52 sur la bride d'équipement 54 est réalisé au moyen d'un bourrelet annulaire 68 formé à l'extrémité ouverte de cet équipement de manipulation. Le bourrelet 68 est reçu dans une gorge formée sur la périphérie de la bride d'équipement 54. Ce montage n'est donné qu'à titre d'exemple, tout autre type de montage assurant le raccordement étanche de l'équipement de manipulation 66 sur la bride 54 pouvant être utilisé.

L'ensemble 50 comprend de plus des moyens d'accouplement étanche 70 par lesquels la bride d'équipement 54 peut être accouplée sur la bride d'enceinte 22 et des moyens d'accouplement étanche 72 par lesquels la porte d'équipement 54 peut être accouplée sur la porte d'enceinte 20.

Les moyens d'accouplement étanche 70 et 72 sont du type à baïonnette et comprennent, sur la face de la bride fixe 14 tournée vers l'extérieur de l'enceinte et sur la face extérieure de la porte d'enceinte 20, des parties communes avec les moyens d'accouplement 30 et 40 décrits précédemment en se référant aux figures 1 et 2. Ces mécanismes prévus sur la bride d'enceinte 14 et sur la porte d'enceinte 20 sont prévus pour coopérer avec des mécanismes complémentaires formés sur la périphérie extérieure de la bride mobile 54 et sur la face extérieure de la porte 58, de telle sorte qu'une rotation d'un angle donné, par exemple d'environ 30°, de l'ensemble 50 permet de faire passer les moyens d'accouplement étanche 70 et 72 d'un état désaccouplé illustré sur la figure 3 à un état accouplé illustré sur la figure 4, et inversement.

La rotation de l'ensemble 50 est commandée par des leviers de manoeuvre 32 montés sur la bride mobile 54. Les leviers de manoeuvre 32 peuvent être les mêmes que ceux qui sont utilisés pour commander la rotation de l'outillage étanche 26. A cet effet, les leviers de manoeuvre 32 sont avantageusement démontables.

Les moyens d'accouplement étanche 70 et 72 sont réalisés d'une manière bien connue des spécialistes, de sorte qu'il n'en sera pas fait de description détaillée.

Dans l'état accouplé des moyens d'accouplement étanche 70 et 72, l'étanchéité entre les brides 14 et 54 est assurée par la venue en appui du joint d'étanchéité 64 porté par la bride mobile 54 contre la face de la bride fixe 14 tournée vers l'extérieur de l'enceinte de confinement et par la venue en appui du joint d'étanchéité 16 monté sur la porte d'enceinte 20 contre la face de la porte d'équipement 58 tournée vers l'extérieur par rapport à l'espace stérile 60.

Sur la figure 3, on a représenté l'ensemble 50 dans l'état qu'il occupe lorsque aucune manipulation à l'intérieur du volume stérile 12 n'est envisagée. Dans ces conditions, les moyens d'accouplement étanche 22 sont accouplés, c'est-à-dire que l'ouverture 16 formée dans la bride fixe 14 est obturée de façon étanche par la porte d'enceinte 20.

Lorsqu'une manipulation doit être effectuée, à l'intérieur de l'enceinte étanche, l'ensemble 50 est accosté sur la bride fixe 14 et sur la porte d'enceinte 20 comme l'illustrent schématiquement les flèches sur la figure 3. Lors de cet accostage, les mécanismes complémentaires des moyens d'accouplement étanche 70 et 72 s'engagent les uns dans les autres.

Par une rotation de l'ensemble 50, commandée depuis l'extérieur de l'enceinte par les leviers de manoeuvre 32, l'opérateur amène alors les moyens d'accouplement étanche 70 et 72 dans leur état accouplé. La bride mobile 54 est donc verrouillée de façon étanche sur la bride fixe 14. De façon comparable, la porte d'équipement 58 est verrouillée sur la porte d'enceinte 20 pour former une double porte.

Au travers de l'équipement de manipulation 52, c'est-à-dire en enfilant le gant constituant cet équipement dans la forme de réalisation illustrée sur la figure 4, l'opérateur actionne ensuite la poignée 66 de façon à faire tourner la double porte dans le sens correspondant au désaccouplement des moyens d'accouplement étanche 22 et 62.

De façon plus précise, lors de la rotation de la double porte commandée par la poignée 66, on réalise à la fois le désaccouplement de la porte d'équipement 58 par rapport à la bride mobile 54 et le désaccouplement de la porte d'enceinte 20 par rapport à la bride fixe 14. Cette rotation peut correspondre par exemple à une rotation d'environ 30° des portes-58 et 20.

Par conséquent, l'opérateur peut poser la double porte ainsi formée à l'intérieur de l'enceinte de confinement, toujours en s'aidant de la poignée 66 et au travers de l'équipement de manipulation 52, comme l'illustre la figure 4. L'équipement de manipulation se trouve alors dans son état opérationnel, sans qu'aucune intervention n'ait été effectuée depuis l'intérieur de l'isolateur et sans qu'à aucun moment le confinement de ce dernier n'ait été rompu.

De ce point de vue, il est important d'observer qu'étant donné que l'espace 60 initialement emprisonné dans l'ensemble 50 entre la porte 58, la bride 54 et l'équipement de manipulation 52 était stérile, le caractère stérile du volume 12 délimité par la paroi 10 de l'isolateur n'est pas affecté par cette opération. Le caractère stérile du volume 12 est également préservé par le fait que la partie cachée de l'interface 13 a été stérilisée en même temps que ce volume 12, grâce à l'outillage étanche 26.

Lorsque les manipulations à l'intérieur de l'enceinte de confinement sont terminées, des opérations inverses de celles qui viennent d'être décrites permettent de ramener l'enceinte dans son état initial illustré sur la figure 3. Le confinement du volume stérile 12 est alors préservé par la porte d'enceinte 20 aussi longtemps qu'un équipement de manipulation 52 n'est pas remis en place.

L'intégrité des équipements de manipulation 52 peut être contrôlée lorsqu'on le souhaite. A cet effet, les- opérateurs disposent d'une boîte de contrôle (non représentée) dans laquelle ils placent l'équipement à contrôler. Plus précisément, l'opérateur connecte la boîte sur la bride fixe 14 et procède au contrôle "in situ", soit par une méthode de chute de pression, soit par une méthode de remontée d'oxygène.

Lorsqu'un équipement de manipulation 52 est endommagé au cours de son utilisation, cet équipement est démonté avec l'ensemble 50 pour revenir à l'état de la figure 3, comme lorsque les manipulations sont terminées. L'opérateur met ensuite en place un équipement de manipulation 52 neuf ou non endommagé en accostant sur la bride fixe 14 et sur la porte d'enceinte 20 un autre ensemble 50 comportant cet équipement 52, pour ramener l'enceinte dans son état actif comme on l'a décrit précédemment en se référant successivement aux figures 3 et 4.

Selon une caractéristique essentielle de l'invention, il est important d'observer que toutes ces opérations sont effectuées en totalité depuis l'extérieur de l'enceinte de confinement, sans aucune rupture dudit confinement et sans que l'atmosphère stérile contenue dans l'enceinte n'en soit affectée.

Bien entendu, on comprend que le procédé qui vient d'être décrit dans le cas où l'équipement de manipulation 52 est constitué par un gant peut aussi être utilisé dans le cas où cet élément est constitué par un demi scaphandre.

Par ailleurs et comme on l'a déjà noté, les différents moyens d'accouplement étanche peuvent être constitués par des dispositifs autres que des dispositifs à baïonnette. Dans ce cas, la poignée 66 peut être remplacée par tout autre moyen de manoeuvre, tel qu'un levier, un volant, etc. permettant d'actionner ces moyens d'accouplement étanche.

Enfin, il est à noter que l'interface 13 comporte avantageusement des sécurités (non représentées) permettent d'éviter l'exécution de manoeuvres risquant de conduire à une rupture de confinement de l'enceinte ou de l'ensemble 50. Ces sécurités, bien connues des spécialistes pour les dispositifs de transfert à double porte, permettent notamment d'empêcher toute ouverture de l'une ou l'autre des portes 20 et 58 tant que les moyens d'accouplement étanche 70 ne sont pas accouplés, et tout désaccouplement de ces moyens d'accouplement étanche 70 tant que les portes 20 et 58 ne sont pas accouplées avec leurs brides respectives 14 et 54.

## Revendications

1. Procédé de montage d'un équipement de manipulation (52) sur une interface (13) d'une enceinte de confinement, comprenant une bride fixe (14) délimitant une ouverture d'enceinte (16) fermée par une porte d'enceinte (20), ledit procédé comprenant les étapes suivantes :
- préparation d'un ensemble (50) comprenant ledit équipement de manipulation (52), monté sur une bride mobile (54) délimitant une ouverture diéquipement (56) fermée par une porte d'équipement (58);
- accostage dudit ensemble (50) sur ladite interface (13), de façon à connecter la bride mobile (54) à la bride fixe (14) et la porte d'équipement (58) à la porte d'enceinte (20) ;
- ouverture de la double porte formée par la porte d'équipement (58) et la porte d'enceinte (20) connectées l'une à l'autre ;
**caractérisé en ce que**, l'enceinte de confinement devant contenir un milieu stérile, les étapes suivants sont effectuées entre la préparation dudit ensemble (50) et son accostage:
- stérilisation de l'espace intérieur dudit ensemble (50) ;
- stérilisation de l'enceinte de confinement et d'une partie cachée de l'interface (13), après accostage d'un outillage étanche (26) sur la bride fixe (14) et ouverture partielle de la porte d'enceinte (20);
- refermeture de la porte d'enceinte (20);
- désaccouplement de l'outillage étanche (26).

2. Procédé selon la revendication 1, dans lequel ledit ensemble (50) est accosté sur l'interface (13) en commandant sa rotation au moyen d'un organe de manoeuvre amovible (32) préalablement monté sur la bride mobile (54).

3. Procédé selon l'une quelconque des revendications précédentes, dans lequel on contrôle l'étanchéité de l'équipement de manipulation (52) en connectant une boîte de contrôle sur la bride fixe (14), après l'accostage dudit ensemble (50) et l'ouverture de la double porte.

4. Procédé selon l'une quelconque des revendications 1 et 2, dans lequel on contrôle l'étanchéité de l'équipement de manipulation (52) en déconnectant ledit ensemble (50) de l'interface (13) et en le connectant sur une boîte de contrôle indépendante.

5. Procédé selon l'une quelconque des revendications précédentes, dans lequel on ouvre la double porte et on la place dans l'enceinte de confinement au moyen d'une poignée (66) montée sur la porte d'équipement (58), à l'intérieur de l'équipement de manipulation (52).

6. Procédé selon l'une quelconque des revendications précédentes, dans lequel l'équipement de manipulation (52) est un gant.

## Claims

1. Method for mounting handling equipment (52) on an interface (13) of a confinement chamber, comprising a fixed flange (14) defining a chamber opening (16) sealed by a chamber door (20), the said method comprising the following steps:
- preparation of an assembly (50) comprising the said handling equipment (52), mounted on a moving flange (54) defining an equipment opening (56) sealed by an equipment door (58);
- coupling of the said assembly (50) onto the said interface (13), so as to connect the moving flange (54) to the fixed flange (14) and the equipment door (58) to the chamber door (20);
- opening of the double door formed by the equipment door (58) and the chamber door (20) connected to one another;
**characterized in that** the confinement chamber having to contain a sterile atmosphere, the following steps being performed between the preparation of the said assembly (50) and its coupling:
- sterilisation of the internal space of the said assembly (50);
- sterilisation of the confinement chamber and of a hidden part of the interface (13), after coupling of impervious tooling (26) onto the fixed flange (14) and partial opening of the chamber door (20);
- re-closing of the chamber door (20);
- uncoupling of the impervious tooling (26).

2. Method of claim 1, wherein the said assembly (50) is coupled to the interface (13) by controlling its rotation by means of a removable handling part (32) mounted beforehand on the moving flange (54).

3. Method according to any of the previous claims, wherein the imperviousness of the handling equipment (52) is controlled by connecting a control unit to the fixed flange (14), after coupling the said assembly (50) and the double door opening.

4. Method according to any of claims 1 and 2, wherein the imperviousness of the handling equipment (52) is controlled by disconnecting the said assembly (50) from the interface (13) and by connecting it to an independent control unit.

5. Method according to any of the previous claims, wherein the double door is opened and it is placed in the confinement chamber by means of a handle (66) mounted on the equipment door (58), inside the handling equipment (52).

6. Method according to any of the previous claims, wherein the handling equipment (52) is a glove.

## Patentansprüche

1. Verfahren zum Anbringen einer Handhabungseinrichtung (52) an einer Verbindungsstelle (13) eines Schutzraums, mit einem festen Flansch (14), welcher eine Raumöffnung (16) umgrenzt, die durch eine Raumtür (20) geschlossen ist, wobei das Verfahren die folgenden Schritte umfasst:
- Vorbereiten einer die Handhabungseinrichtung (52) umfassenden Einheit (50), die an einem beweglichen Flansch (54) angebracht ist, welcher eine Öffnung (56) der Einrichtung umgrenzt, die durch eine Tür (58) der Einrichtung geschlossen ist;
- Ansetzen der Einheit (50) an der Verbindungsstelle (13), so dass der bewegliche Flansch (54) mit dem festen Flansch (14) und die Einrichtungstür (58) mit der Raumtür (20) verbunden ist;
- Öffnen der Doppeltür, welche aus der Einrichtungstür (58) und der Raumtür (20) gebildet ist, die miteinander verbunden sind;
**dadurch gekennzeichnet, dass** zwischen dem Vorbereiten der Einheit und ihrem Ansetzen die folgenden Schritte ausgeführt werden, da der Schutzraum eine sterile Umgebung enthalten muss:
- Sterilisation des Innenraums der Einheit (50);
- Sterilisation des Schutzraums und eines verdeckten Teils der Verbindungsstelle (13), nach dem Ansetzen eines dichten Werkzeugs (26) an dem festen Flansch (14) und dem teilweisen Öffnen der Raumtür (20);
- Schließen der Raumtür (20);
- Lösen des dichten Werkzeugs (26).

2. Verfahren nach Anspruch 1,
bei dem die Einheit (50) an der Verbindungsstelle (13) angesetzt wird, wobei ihre Drehung mittels eines abnehmbaren, vorab am beweglichen Flansch (54) montierten Betätigungsorgans (32) ausgeführt wird.

3. Verfahren nach einem der vorhergehenden Ansprüche,
bei dem die Dichtheit der Handhabungseinrichtung (52) **dadurch** geprüft wird, dass nach dem Ansetzen der Einheit (50) und dem Öffnen der Doppeltür an dem festen Flansch (14) ein Messgerät angeschlossen wird.

4. Verfahren nach einem der Ansprüche 1 oder 2,
bei dem die Dichtheit der Handhabungseinrichtung (52) **dadurch** geprüft wird, dass die Einheit (50) von der Verbindungsstelle (13) gelöst und an einem separaten Messgerät angeschlossen wird.

5. Verfahren nach einem der vorhergehenden Ansprüche,
bei dem die Doppeltür geöffnet wird und mittels eines innen in der Handhabungseinrichtung (52) an der Einrichtungstür (58) angebrachten Griffs (66) in dem Schutzraum platziert wird.

6. Verfahren nach einem der vorhergehenden Ansprüche,
bei dem die Handhabungseinrichtung (52) ein Handschuh ist.
